# EUROPÄISCHE PATENTSCHRIFT

(11) **EP 4 605 614 B1**
(45) Veröffentlichungstag und Bekanntmachung des Hinweises auf die Patenterteilung: **28.10.2026**
(21) Anmeldenummer: 23776915.3
(22) Anmeldetag: 22.09.2023
(51) Int. Cl.: E04G 21/04, B29C 64/106, B29C 64/227, B29C 64/393, B33Y 10/00, B33Y 30/00, B33Y 50/02

(54) **VERFAHREN UND SYSTEM ZUM BETREIBEN EINES BAUSTOFFSYSTEMS**
METHOD AND SYSTEM FOR OPERATING A BUILDING MATERIAL SYSTEM
PROCÉDÉ ET SYSTÈME POUR FAIRE FONCTIONNER UN SYSTÈME DE MATÉRIAU DE CONSTRUCTION

(30) Priorität: 19.10.2022 DE 102022211081
(43) Veröffentlichungstag der Anmeldung: 27.08.2025
(73) Patentinhaber: INSTATIQ GmbH, 70567 Stuttgart (DE)
(72) Erfinder: DÜRR, Hans-Bernd, 71083 Herrenberg (DE); HUTH, Tobias, 70327 Stuttgart (DE); LUTZ, Florian, 70794 Filderstadt (DE)
(74) Vertreter: Patentanwälte Ruff, Wilhelm, Beier, Dauster & Partner mbB
(86) Internationale Anmeldenummer: PCT/EP2023/076208
(87) Internationale Veröffentlichungsnummer: WO 2024/083442

(56) Entgegenhaltungen:
- EP-A1- 3 705 664
- EP-B1- 2 103 760
- WO-A1-2020/193611
- SOPHIE ZORN: "Modellbasierte aktive Schwingungstilgung eines Multilink-Groÿraummanipulators", 8 December 2017 (2017-12-08), XP055616776, Retrieved from the Internet <URL:https://d-nb.info/1156851432/34> [retrieved on 20190829]

## Beschreibung

### ANWENDUNGSGEBIET UND STAND DER TECHNIK

Die Erfindung bezieht sich auf ein Verfahren und ein System zum Betreiben eines Baustoffsystems.

Die Dissertation von Sophie Zorn offenbart eine modellbasierte aktive Schwingungstilgung eines Multilink-Großraummanipulators.

Die EP 3 705 664 A1 offenbart eine Gelenkarm-Steuerung einer Betonpumpe.

Die EP 2 103 760 B1 offenbart ein Verfahren zum Steuern der Schwingungen in einem Gelenkarm zum Pumpen von Beton und eine zugehörige Vorrichtung.

### AUFGABE UND LÖSUNG

Der Erfindung liegt als Aufgabe die Bereitstellung eines Verfahrens und eines Systems jeweils zum Betreiben eines Baustoffsystems zugrunde, das jeweils verbesserte Eigenschaften aufweist.

Die Erfindung löst diese Aufgabe durch die Bereitstellung eines Verfahrens und eines Systems beschrieben in den unabhängigen Ansprüchen. Vorteilhafte Weiterbildungen und/oder Ausgestaltungen der Erfindung sind in den abhängigen Ansprüchen beschrieben.

Das erfindungsgemäße Verfahren ist zum Betreiben eines Baustoffsystems. Das Baustoffsystem weist eine Austrageinrichtung, einen Verteilermast und ansteuerbare Antriebseinrichtungen auf. Die Austrageinrichtung ist zum Austragen von Baustoff aus dem Baustoffsystem heraus ausgebildet. Der Verteilermast weist zum Positionieren der Austrageinrichtung, insbesondere zueinander, verstell- bzw. bewegbare Mastsegmente auf. Die Antriebseinrichtungen sind zum Antreiben der Mastsegmente ausgebildet, insbesondere zu deren Verstellung. Das Verfahren weist die Schritte auf: a) Identifizieren, insbesondere mindestens, eines Modells des Baustoffsystems, insbesondere eines Mast-Modells des Verteilermasts, mittels Ansteuerns der Antriebseinrichtungen mit Eingangssignalen zum Anregen von Bewegungen des Verteilermasts, insbesondere der Mastsegmente, und mittels Erfassens von Ausgangssignalen verursacht durch die angeregten Bewegungen. b) Bestimmen, insbesondere Berechnen, insbesondere mindestens, eines Reglers, insbesondere eines Mast-Reglers, in Abhängigkeit von, insbesondere mindestens, dem identifizierten Modell. c) Regeln des Baustoffsystems, insbesondere zum Erreichen und/oder zum Halten einer Soll-Stellung des Verteilermasts, mittels, insbesondere mindestens, des bestimmten Reglers.

Dies, insbesondere der Schritt a), ermöglicht, dass das Modell unabhängig von Modellierungsfehlern und/oder, insbesondere somit, nahe an einem realen Verhalten des Baustoffsystems sein kann. Alternativ oder zusätzlich, insbesondere somit, ermöglicht dies, insbesondere der Schritt b), ein gutes Betreiben, insbesondere Regeln, des Baustoffsystems, insbesondere mittels des Reglers adaptiert an das reale Verhalten des Baustoffsystems. Insbesondere kann das Regeln zu dem Erreichen und/oder zu dem Halten ein Stabilisieren und/oder ein Ausgleichen von Störungen ermöglichen. Somit kann dies ein genaues Positionieren, insbesondere einer Mastspitze des Verteilermasts und somit, der Austrageinrichtung ermöglichen.

Insbesondere können/kann das Verfahren, das Betreiben, das Austragen, das Positionieren, das Antreiben, das Identifizieren, das Ansteuern, das Erfassen, das Bestimmen und/oder das Regeln automatisch bzw. selbstständig sein.

Das Baustoffsystem kann mobil sein, insbesondere fahrbar, insbesondere ein Auto-Baustoffsystem.

Ansteuerbar kann hydraulisch und/oder elektrisch ansteuerbar sein.

Der Begriff "Aktuatoren" kann für den Begriff "Antriebseinrichtungen" synonym verwendet werden.

Der Begriff "umfasst" oder "hat" kann für den Begriff "aufweist" synonym verwendet werden.

Der Begriff "konfiguriert" kann für den Begriff "ausgebildet" synonym verwendet werden.

Der Baustoff kann ein Dickstoff sein, insbesondere Beton, Bentonit, Zement, Mörtel, Estrich und/oder Putz.

Der Verteilermast kann zu dem Positionieren der Austrageinrichtung und/oder verstellbar ausgebildet sein.

Der Begriff "Abschnitt" kann für den Begriff "Segment" synonym verwendet werden.

Der Schritt a) kann als Systemidentifizieren bzw. -identifizierung bzw. -identifikation bezeichnet werden.

Das Identifizieren kann experimentell und/oder mittels eines Ermittelns einer quantitativen Abhängigkeit der Ausgangssignale von den Eingangssignalen sein.

Das Modell kann mathematisch und/oder dynamisch sein und/oder das Baustoffsystem im Frequenzbereich beschreiben, wie z.B. ein Bodediagramm oder eine Zustandsraumdarstellung, und/oder Parameter, insbesondere Werte der Parameter, aufweisen. Insbesondere kann das Modell ein eine Beziehung zwischen den Ein- und Ausgangssignalen beschreibendes Differentialgleichungssystem sein.

Die Eingangssignale und/oder die Ausgangssignale können für das Systemidentifizieren und/oder definiert bzw. vorgegeben und/oder physikalisch und/oder verschieden, insbesondere verschiedenartig, sein und/oder Werte aufweisen.

Der Begriff "Test" kann für den Begriff "Eingang" synonym verwendet werden.

Der Begriff "Bewirken" kann für den Begriff "Anregen" synonym verwendet werden.

Der Begriff "Messen" kann für den Begriff "Erfassen" synonym verwendet werden.

Der Begriff "Antwort" kann für den Begriff "Ausgang" synonym verwendet werden.

Die Ausgangssignale können sich durch die bzw. in Abhängigkeit von den angeregten Bewegungen bzw. den Eingangssignalen einstellen.

Das Erfassen kann mittels mindestens einer, insbesondere elektrischen, Sensoreinrichtung, insbesondere Sensoreinrichtungen, des Baustoffsystems sein.

Der Begriff "Erzeugen" oder "Auslegen" kann für den Begriff "Bestimmen" synonym verwendet werden.

Der Regler kann eine Art bzw. einen Typ und/oder Parameter, insbesondere Werte der Parameter, aufweisen.

Der Begriff "basierend auf" oder "anhand des" kann für den Begriff "in Abhängigkeit von" synonym verwendet werden.

Die Soll-Stellung kann Werte aufweisen und/oder veränderbar sein.

Das Regeln kann ein Regeln des Verteilermasts aufweisen, insbesondere sein.

Der Begriff "Pose" kann für den Begriff "Stellung" synonym verwendet werden.

Der Schritt b) kann zeitlich nach dem Schritt a) ausgeführt werden. Alternativ oder zusätzlich kann der Schritt c) zeitlich nach dem Schritt b) ausgeführt werden.

In einer Weiterbildung der Erfindung sind die Eingangssignale zum Anregen eines Frequenzspektrums des Verteilermasts, insbesondere der Mastsegmente. Dies ermöglicht, dass das Modell sehr nahe an dem realen Verhalten des Baustoffsystems sein kann. Insbesondere kann dies ermöglichen, dass Eigenschwingungen bzw. Resonanzen des Baustoffsystems, insbesondere des Verteilermasts, angeregt werden können. Insbesondere kann das Baustoffsystem, insbesondere der Verteilermast, schwingfähig sein.

Insbesondere können die Eingangssignale weißes Rauschen und/oder Chirp aufweisen, insbesondere sein. Im Übrigen wird auf die Fachliteratur verwiesen.

In einer Weiterbildung der Erfindung weisen die Eingangssignale Sprünge, insbesondere verschiedener Zeitdauer und/oder verschiedener Amplitude, auf. Insbesondere sind die Eingangssignale die Sprünge. Überraschenderweise ermöglicht dies eine relativ schwache Belastung des Baustoffsystems, insbesondere im Vergleich zu weißem Rauschen und/oder Chirp.

In einer Weiterbildung der Erfindung wird der Schritt a) für verschiedene Stellungen des Verteilermasts, insbesondere der Mastsegmente, und/oder für verschiedene Beladungen des Verteilermasts mit Baustoff zum Identifizieren verschiedener Modelle des Baustoffsystems ausgeführt, insbesondere mehrfach bzw. wiederholt. Der Schritt b) weist auf: Bestimmen, insbesondere nur, des, insbesondere einzigen, Reglers in Abhängigkeit von den identifizierten Modellen. Dies ermöglicht, dass der, insbesondere einzige, bestimmte Regler robust bzw. stabil und/oder, insbesondere somit, fest sein kann und/oder zwischen bestimmten Reglern umgeschaltet bzw. umgestellt werden kann, insbesondere in Abhängigkeit von Robustheitsschranken bzw. -grenzen bestimmt in Abhängigkeit von den Stellungen und/oder den Beladungen. Insbesondere können die Stellungen eine Bogen-Stellung, eine horizontale Stellung, eine vertikale Stellung und/oder eine Z-Stellung und/oder mindestens zwei, insbesondere mindestens fünf, insbesondere mindestens zehn, Stellungen sein. Zusätzlich oder alternativ können die Beladungen mindestens zwei, insbesondere mindestens fünf, insbesondere mindestens zehn, Beladungen sein.

In einer Weiterbildung der Erfindung wird der Schritt a) mittels eines gegenüber dem in dem Schritt b) bestimmten Reglers einfacheren Reglers, insbesondere eines P-Reglers (Proportional-Reglers), ausgeführt. Zusätzlich oder alternativ weist das Modell ein lineares Modell auf. Insbesondere ist das Modell das lineare Modell. Weiter zusätzlich oder alternativ weist der in dem Schritt b) bestimmte Regler einen linearen Regler, insbesondere einen LQ-Regler (Linear-Quadratischer-Regler), einen LQG-Regler (Linear-Quadratischer-Gaußscher-Regler), einen LPV-Regler (Linear-Parameter-Veränderlicher bzw. Varianter-Regler), und/oder einen robusten Regler, insbesondere einen H-unendlich-Regler, und/oder einen modellprädikativen Regler auf. Insbesondere ist der bestimmte Regler der lineare Regler und/oder der robuste Regler und/oder der modellprädikative Regler. Dies, insbesondere der einfache Regler, ermöglicht das Baustoffsystem, insbesondere den Verteilermast, zu stabilisieren. Insbesondere kann der einfache Regler als stabilisierender Regler bezeichnet werden. Zusätzlich oder alternativ ermöglicht dies, insbesondere das lineare Modell, nahe genug an das reale Verhalten des Baustoffsystems zu kommen. Insbesondere kann das lineare Modell ein lineares bzw. gewöhnliches Differentialgleichungssystem sein. Zusätzlich oder alternativ kann das Baustoffsystem linear und/oder zeitinvariant sein. Weiter zusätzlich oder alternativ ermöglicht der Regler ein einfaches Bestimmen und/oder ein sehr gutes Betreiben, insbesondere Regeln, des Baustoffsystems, insbesondere für verschiedene Stellungen des Verteilermasts und/oder für verschiedene Beladungen des Verteilermasts mit Baustoff. Im Übrigen wird auf die Fachliteratur verwiesen.

In einer Weiterbildung der Erfindung weisen/weist das Baustoffsystem und/oder der Verteilermast zum Verstellen der Mastsegmente ein Drehwerk und/oder Drehgelenke auf. Zusätzlich oder alternativ sind die Ausgangssignale für Drehwinkelstellungen, insbesondere und Drehwinkelstellungsgeschwindigkeiten, der Mastsegmente repräsentativ. Insbesondere sind die Ausgangssignale die Drehwinkelstellungen, insbesondere und die Drehwinkelstellungsgeschwindigkeiten. Weiter zusätzlich oder alternativ weist der Regler einen Drehwinkelregler auf. Insbesondere ist der Regler der Drehwinkelregler. Insbesondere kann eines der Drehgelenke an einem nicht-freien bzw. festen Ende bzw. Mastfuß des Verteilermasts und/oder dem Drehwerk sein. Zusätzlich oder alternativ kann eine Drehachse des Drehwerks vertikal sein. Weiter zusätzlich oder alternativ können Drehachsen der Drehgelenke horizontal und/oder, insbesondere zueinander, parallel sein. Weiter zusätzlich oder alternativ kann der Begriff "charakteristisch" für den Begriff "repräsentativ" synonym verwendet werden. Weiter zusätzlich oder alternativ kann der Drehwinkelregler als Drehwerk- und/oder Drehgelenkregler bezeichnet werden.

In einer Weiterbildung der Erfindung weist das Baustoffsystem einen Parallelroboter, insbesondere einen Deltaroboter, auf. Der Verteilermast ist zum, insbesondere groben, Positionieren des Parallelroboters, insbesondere an der Mastspitze des Verteilermasts, ausgebildet. Der Parallelroboter ist zum, insbesondere feinen, Positionieren der Austrageinrichtung ausgebildet. Die Antriebseinrichtungen sind zum Antreiben des Parallelroboters ausgebildet, insbesondere von Roboterarmeinrichtungen des Parallelroboters. Insbesondere weist der Schritt a) auf: Identifizieren mindestens des Modells des Baustoffsystems, insbesondere eines Roboter-Modells des Parallelroboters, mittels des Ansteuerns der Antriebseinrichtungen mit den Eingangssignalen zum Anregen von Bewegungen des Parallelroboters und mittels des Erfassens von den Ausgangssignalen verursacht durch die angeregten Bewegungen, insbesondere während eines Stillstands des Verteilermasts. Insbesondere sind die Ausgangssignale für eine, insbesondere translatorische, Position und/oder eine, insbesondere rotatorische, Ausrichtung des Parallelroboters und/oder der Austrageinrichtung in Bezug auf eine Bau-Umgebung des Baustoffsystems repräsentativ. Insbesondere sind die Ausgangssignale die Position und/oder die Ausrichtung. Der Schritt b) weist auf: Bestimmen mindestens des Reglers, insbesondere eines Roboter-Reglers, in Abhängigkeit von mindestens dem identifizierten Modell. Der Schritt c) weist auf: Regeln des Baustoffsystems, insbesondere zum Erreichen und/oder Halten einer Soll-Position und/oder einer Soll-Ausrichtung des Parallelroboters, mittels mindestens des bestimmten Reglers. Der Parallelroboter ermöglicht ein Ausgleichen einer Positionierungsungenauigkeit des Verteilermasts. Somit ermöglicht dies ein sehr genaues Positionieren der Austrageinrichtung. Insbesondere kann der Parallelroboter ein Hexapod sein. Zusätzlich oder alternativ kann der Begriff "Manipulator" für den Begriff "Roboter" synonym verwendet werden. Weiter zusätzlich oder alternativ kann der Verteilermast als Seriellroboter bezeichnet werden. Weiter zusätzlich oder alternativ kann die Mastspitze ein freies Ende des Verteilermasts sein. Weiter zusätzlich oder alternativ kann der Parallelroboter gegenüber dem Verteilermast, insbesondere der Mastspitze, drehbar sein, insbesondere um eine vertikale Drehachse herum. Weiter zusätzlich oder alternativ kann der Begriff "Orientierung" für den Begriff "Ausrichtung" synonym verwendet werden. Weiter zusätzlich oder alternativ können/kann die Soll-Position und/oder die Soll-Ausrichtung Werte aufweisen und/oder veränderbar sein. Weiter zusätzlich oder alternativ können das Mast-Modell und das Roboter-Modell verschieden sein. Weiter zusätzlich oder alternativ können der Mast-Regler und der Roboter-Regler verschieden sein. Weiter zusätzlich oder alternativ kann das Regeln ein Regeln des Parallelroboters aufweisen, insbesondere sein. Weiter zusätzlich oder alternativ kann der Stillstand des Verteilermasts geregelt oder ungeregelt sein.

In einer Ausgestaltung der Erfindung wird das Erfassen eines Ausgangssignals der Ausgangssignale verursacht durch die angeregten Bewegungen des Parallelroboters mittels einer optischen Messeinrichtung ausgeführt, insbesondere eines Lasertrackers. Dies ermöglicht eine hohe Genauigkeit, insbesondere im 1 mm (Millimeter)-Bereich. Insbesondere kann die Messeinrichtung elektrisch und/oder für eine absolute Position sein. Zusätzlich oder alternativ kann die Messeinrichtung von dem Verteilermast und/oder dem Parallelroboter unabhängig und/oder extern sein.

In einer Ausgestaltung der Erfindung weist der Schritt b) auf: Bestimmen des Reglers zu dem Regeln des Verteilermasts zu dem Positionieren der Austrageinrichtung derart, dass der Parallelroboter seine Mitten-Position und/oder seine Mitten-Ausrichtung erreicht. Insbesondere weist der Schritt a) auf: Identifizieren des Modells aufweisend das Mast-Modell des Verteilermasts und das Roboter-Modell des Parallelroboters. Der Schritt b) weist auf: Bestimmen des Mast-Reglers zu einem, insbesondere dem, Regeln des Verteilermasts in Abhängigkeit von dem identifizierten Mast-Modell und des Roboter-Reglers zu einem, insbesondere dem, Regeln des Parallelroboters in Abhängigkeit von dem identifizierten Roboter-Modell. Identifizieren eines System-Modells des Baustoffsystems mittels Ansteuerns der Antriebseinrichtungen mit Eingangssignalen bestimmend eine Spitzenposition der Mastspitze mittels des bestimmten Mast-Reglers, während der Parallelroboter zum Erreichen einer Soll-Position der Austrageinrichtung mittels des bestimmten Roboter-Reglers geregelt wird, und mittels Erfassens von Ausgangssignalen aufweisend eine Abweichung einer Ist-Position des Parallelroboters von der Mitten-Position und/oder einer Ist-Ausrichtung des Parallelroboters von der Mitten-Ausrichtung. Bestimmen des Reglers in Abhängigkeit von dem identifizierten System-Modell. Der Schritt c) weist auf: Regeln des Verteilermasts zu dem Positionieren der Austrageinrichtung mittels des bestimmten Reglers (Tracking-Controller bzw. Trackingregler), und insbesondere des Parallelroboters zu dem Positionieren der Austrageinrichtung mittels des bestimmten Roboter-Reglers. Dies ermöglicht einen großen Spielraum bzw. Arbeitsbereich des Parallelroboters zu gewährleisten. Insbesondere kann die Mitten-Position durch eine Mitte eines Bereichs möglicher Positionen des Parallelroboters definiert bzw. vorgegeben sein, insbesondere begrenzt durch mechanische Anschläge. Zusätzlich oder alternativ kann die Mitten-Ausrichtung durch eine Mitte eines Bereichs möglicher Ausrichtungen des Parallelroboters definiert bzw. vorgegeben sein, insbesondere begrenzt durch mechanische Anschläge. Weiter zusätzlich oder alternativ können/kann die Mitten-Position und/oder die Mitten-Ausrichtung Werte aufweisen. Weiter zusätzlich oder alternativ kann der Schritt b) als Systemidentifizieren bzw. -identifizierung bzw. -identifikation bezeichnet werden. Weiter zusätzlich oder alternativ kann das System-Modell von dem Mast-Modell und/oder dem Roboter-Modell verschieden sein. Weiter zusätzlich oder alternativ kann der Regler von dem Mast-Regler und/oder dem Roboter-Regler verschieden sein. Weiter zusätzlich oder alternativ kann der Regler dem Mast-Regler überlagert bzw. übergeordnet sein und/oder als System-Regler bezeichnet werden. Weiter zusätzlich oder alternativ kann die Spitzenposition eine Soll-Spitzenposition und/oder veränderbar sein. Weiter zusätzlich oder alternativ kann die Soll-Position der Austrageinrichtung veränderbar sein. Weiter zusätzlich oder alternativ kann der Begriff "Differenz" für den Begriff "Abweichung" synonym verwendet werden. Weiter zusätzlich oder alternativ können/kann die Ist-Position und/oder die Ist-Ausrichtung veränderbar sein.

In einer Ausgestaltung der Erfindung weist das Baustoffsystem das Drehwerk und eine Inertialsensoreinrichtung auf. Die Inertialsensoreinrichtung ist an einem dem Drehwerk gegenüberliegenden Ende des Verteilermasts, insbesondere dem Parallelroboter, und/oder der Austrageinrichtung zu dem Erfassen eines Ausgangssignals der Ausgangssignale verursacht durch eine Bewegung der Bewegungen des Verteilermasts angeregt durch ein Drehen des Drehwerks angeordnet. Dies ermöglicht eine hohe Genauigkeit. Insbesondere kann der Begriff "inertiale Messeinheit" für den Begriff "Inertialsensoreinrichtung" synonym verwendet werden. Zusätzlich oder alternativ kann die Inertialsensoreinrichtung elektrisch sein und/oder einen Beschleunigungs- und/oder Drehratensensor aufweisen, insbesondere sein. Weiter zusätzlich oder alternativ kann das Ausgangssignal für eine Beschleunigung und/oder eine Drehrate repräsentativ sein, insbesondere die Beschleunigung und/oder die Drehrate sein. Weiter zusätzlich oder alternativ kann die Inertialsensoreinrichtung von dem Verteilermast und/oder dem Parallelroboter und/oder der Messeinrichtung unabhängig und/oder extern sein. Weiter zusätzlich oder alternativ kann das Ende ein letztes Mastsegment sein, insbesondere die Mastspitze.

In einer Weiterbildung der Erfindung weist die Austrageinrichtung einen Druckkopf auf. Insbesondere ist die Austrageinrichtung der Druckkopf. Der Druckkopf ist zu dem Austragen von Baustoff aus dem Baustoffsystem heraus und zum Formen von Baustoff zum Bilden eines Strangs von Baustoff, insbesondere zum 3D-Drucken von einem Bauwerksteil, ausgebildet. Dieses Verfahren ermöglicht ein positionsgenaues Bilden des Strangs, insbesondere in Bezug auf die Bau-Umgebung. Insbesondere kann das Baustoffsystem als Drucksystem bezeichnet werden. Zusätzlich oder alternativ können/kann das Formen und/oder das 3D-Drucken automatisch sein. Weiter zusätzlich oder alternativ kann der Baustoff Beton, insbesondere Frischbeton, und/oder thixotrop und/oder stichfest bzw. formstabil sein, insbesondere während des Austragens. Weiter zusätzlich oder alternativ kann der, insbesondere ausgetragene und/oder geformte, Strang kontinuierlich sein bzw. sich in, insbesondere gewisser, Länge erstrecken. Weiter zusätzlich oder alternativ kann der Strang, insbesondere schichtweise, auf einem bzw. einen bereits gebildeten Strang abgelegt bzw. aufgetragen werden und/oder auf dem bzw. den Strang kann, insbesondere schichtweise, ein weiterer Strang abgelegt bzw. aufgetragen werden. Weiter zusätzlich oder alternativ kann das Bauwerksteil 3-dimensional und/oder ein Gebäudebauwerksteil und/oder eine Wand und/oder eine Decke sein. Weiter zusätzlich oder alternativ kann der Strang, insbesondere eine Breite des Strangs, eine, insbesondere gesamte, Wand- und/oder Deckendicke aufweisen. Weiter zusätzlich oder alternativ kann das 3D-Drucken als additives Fertigen bezeichnet werden.

In einer Weiterbildung, insbesondere einer Ausgestaltung, der Erfindung weist der Schritt c) auf: Regeln des Baustoffsystems in Abhängigkeit von Daten, insbesondere einem Bau- bzw. Konstruktionsplan, insbesondere in einer Speichereinrichtung des Baustoffsystems, eines, insbesondere des, zu bauenden, insbesondere zu druckenden, Bauwerkteils. Dies ermöglicht, Fehler beim Bauen zu reduzieren oder sogar zu vermeiden.

In einer Weiterbildung der Erfindung weist das Verfahren den Schritt auf: Austragen von Baustoff mittels der Austrageinrichtung während des Regelns des Baustoffsystems, insbesondere zu dem Positionieren der Austrageinrichtung, zum Verteilen von Baustoff.

In einer Weiterbildung der Erfindung weist das Baustoffsystem eine Förderleitung auf. Die Förderleitung ist entlang des Verteilermasts zum Leiten von Baustoff zu der Austrageinrichtung angeordnet. Zusätzlich oder alternativ weist das Baustoffsystem eine Baustoffpumpe auf. Die Baustoffpumpe ist zum Fördern von Baustoff, insbesondere durch die Förderleitung hindurch, zu der Austrageinrichtung ausgebildet, insbesondere zu dem Austragen von gefördertem Baustoff. Insbesondere weist das Verfahren den Schritt auf: Fördern von Baustoff mittels der Baustoffpumpe während des Regelns des Baustoffsystems, insbesondere zu dem Positionieren der Austrageinrichtung. Insbesondere kann die Förderleitung verstellbar sein und/oder eine Rohrleitung aufweisen, insbesondere sein. Zusätzlich oder alternativ kann das Fördern automatisch sein. Weiter zusätzlich oder alternativ kann die Baustoffpumpe diskontinuierlich sein, insbesondere eine Kolbenpumpe, insbesondere eine Zweikolbenpumpe, insbesondere mit einer Rohrweiche.

Das erfindungsgemäße System ist zum, insbesondere zu dem, Betreiben eines, insbesondere des, Baustoffsystems, insbesondere ausgebildet. Das System weist eine Identifizierungs-, Bestimmungs- und Regelungs-Einrichtung auf. Die Identifizierungs-, Bestimmungs- und Regelungs-Einrichtung ist zum, insbesondere automatischen, Ausführen eines, insbesondere des, Verfahrens wie vorhergehend beschrieben ausgebildet. Insbesondere weist das System das Baustoffsystem auf. Das System kann den/die gleichen Vorteil/e ermöglichen wie das vorhergehende beschriebene Verfahren. Insbesondere kann das System, insbesondere die Identifizierungs-, Bestimmungs- und Regelungs-Einrichtung, elektrisch sein und/oder eine Recheneinrichtung, insbesondere einen Prozessor, und/oder eine Speichereinrichtung, insbesondere einen Computer, aufweisen.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: schematisch ein erfindungsgemäßes System aufweisend ein Baustoffsystem und ein erfindungsgemäßes Verfahren zum Betreiben des Baustoffsystems,
- Fig. 2: schematisch eine Austrageinrichtung und eine Baustoffpumpe des Baustoffsystems der Fig. 1 bei dem Betreiben,
- Fig. 3: schematisch ein mittels des Baustoffsystems der Fig. 1 3D-gedrucktes Bauwerksteil aus gebildeten Strängen von Baustoff,
- Fig. 4: schematisch ein Ablaufdiagramm des Verfahrens der Fig. 1,
- Fig. 5: schematisch ein weiteres Ablaufdiagramm des Verfahrens der Fig. 1,
- Fig. 6: schematisch einen Graphen einer Amplitude von Sprüngen über der Zeit des Verfahrens der Fig. 1, und
- Fig. 7: schematisch ein nochmal weiteres Ablaufdiagramm des Verfahrens der Fig. 1.

### DETAILLIERTE BESCHREIBUNG DER AUSFÜHRUNGSBEISPIELE

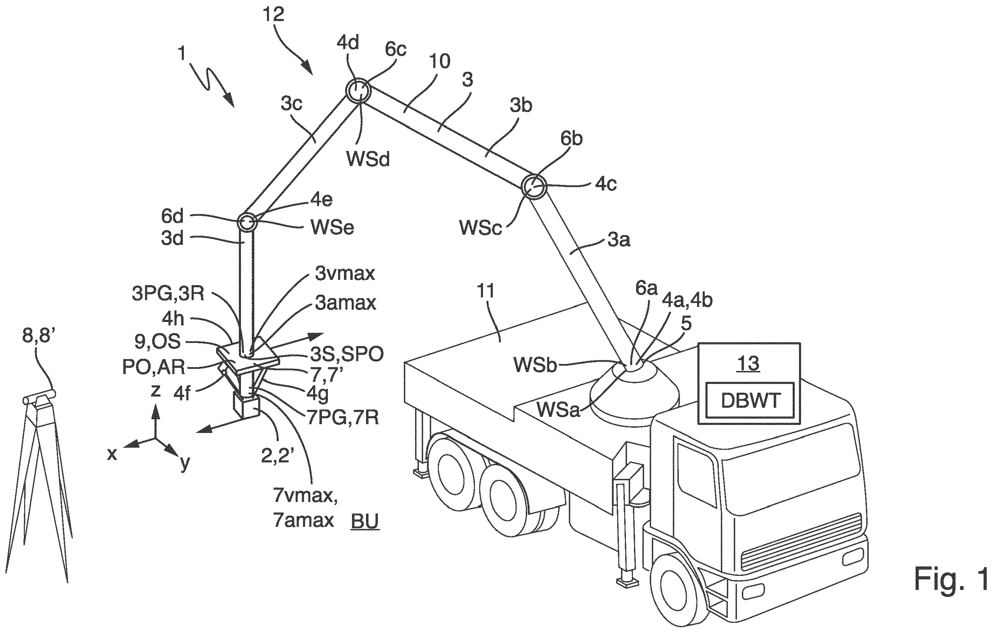

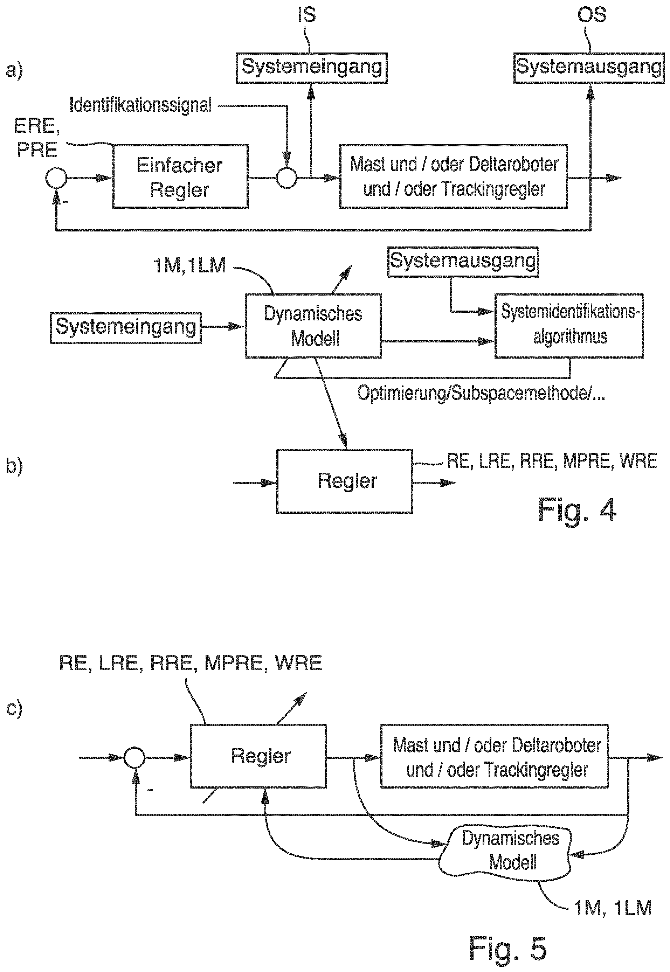

Fig. 1, 2, 4, 5 und 7 zeigen ein erfindungsgemäßes Verfahren und ein erfindungsgemäßes System 12 zum Betreiben eines Baustoffsystems 1.

Das System 12 weist eine Identifizierungs-, Bestimmungs- und Regelungs-Einrichtung 13 auf. Die Identifizierungs-, Bestimmungs- und Regelungs-Einrichtung 13 ist zum Ausführen des Verfahrens ausgebildet, insbesondere führt aus.

Insbesondere weist das System 12 das Baustoffsystem 1 auf.

Das Baustoffsystem 1 weist eine Austrageinrichtung 2, einen Verteilermast 3 und ansteuerbare Antriebseinrichtungen 4a, 4b, 4c, 4d, 4e, 4f, 4g, 4h auf. Die Austrageinrichtung 2 ist zum Austragen von Baustoff BS aus dem Baustoffsystem 1 heraus ausgebildet, insbesondere trägt aus. Der Verteilermast 3 weist zum Positionieren der Austrageinrichtung 2 verstellbare Mastsegmente 3a, 3b, 3c, 3d auf, insbesondere positioniert. Die Antriebseinrichtungen 4a-e sind zum Antreiben der Mastsegmente 3a-d ausgebildet, insbesondere treiben an. Das Verfahren weist die Schritte auf: a) Identifizieren eines Modells 1M des Baustoffsystems 1, insbesondere eines Mast-Modells 3M des Verteilermasts 3, mittels Ansteuerns der Antriebseinrichtungen 4a-e mit Eingangssignalen IS zum Anregen von Bewegungen des Verteilermasts 3 und mittels Erfassens von Ausgangssignalen OS verursacht durch die angeregten Bewegungen. b) Bestimmen, insbesondere Berechnen eines Reglers RE, insbesondere eines Mast-Reglers 3RE, in Abhängigkeit von dem identifizierten Modell 1M, insbesondere dem identifizierten Mast-Modell 3M. c) Regeln des Baustoffsystems 1, insbesondere zum Erreichen und/oder zum Halten einer Soll-Stellung des Verteilermasts 3, mittels des bestimmten Reglers RE, insbesondere des bestimmten Mast-Reglers 3RE.

In dem gezeigten Ausführungsbeispiel weist der Verteilermast 3 vier Mastsegmente 3a-d auf. In alternativen Ausführungsbeispielen kann der Verteilermast mindestens drei Mastsegmente aufweisen.

Im Detail weist das Baustoffsystem 1 einen Parallelroboter 7, insbesondere einen Deltaroboter 7', auf. Der Verteilermast 3 ist zum Positionieren des Parallelroboters 7, insbesondere an einer Mastspitze 3S des Verteilermasts 3, ausgebildet, insbesondere positioniert. Der Parallelroboter 7 ist zum Positionieren der Austrageinrichtung 2 ausgebildet, insbesondere positioniert. Die Antriebseinrichtungen 4f-h sind zum Antreiben des Parallelroboters 7 ausgebildet, insbesondere treiben an. Insbesondere weist der Schritt a) auf: Identifizieren mindestens des Modells 1M des Baustoffsystems 1, insbesondere eines Roboter-Modells 7M des Parallelroboters 7, mittels des Ansteuerns der Antriebseinrichtungen 4f-h mit den Eingangssignalen IS zum Anregen von Bewegungen des Parallelroboters 7 und mittels des Erfassens von den Ausgangssignalen OS verursacht durch die angeregten Bewegungen. Insbesondere sind die Ausgangssignale OS für eine Position PO und/oder eine Ausrichtung AR des Parallelroboters 7 und/oder der Austrageinrichtung 2 in Bezug auf eine Bau-Umgebung BU des Baustoffsystems 1 repräsentativ. Insbesondere sind die Ausgangssignale OS die Position PO und/oder die Ausrichtung AR. Der Schritt b) weist auf: Bestimmen mindestens des Reglers RE, insbesondere eines Roboter-Reglers 7RE, in Abhängigkeit von mindestens dem identifizierten Modell 1M, insbesondere dem identifizierten Roboter-Modell 7M. Der Schritt c) weist auf: Regeln des Baustoffsystems 1, insbesondere zum Erreichen und/oder Halten einer Soll-Position und/oder einer Soll-Ausrichtung des Parallelroboters 7, mittels mindestens des bestimmten Reglers RE, insbesondere des bestimmten Roboter-Reglers 7RE.

Im Detail weist der Schritt b) auf: Bestimmen des Reglers RE zu dem Regeln des Verteilermasts 3 zu dem Positionieren der Austrageinrichtung 2 derart, dass der Parallelroboter 7 seine Mitten-Position und/oder seine Mitten-Ausrichtung erreicht. Insbesondere weist der Schritt a) auf: Identifizieren des Modells 1M aufweisend das Mast-Modell 3M des Verteilermasts 3 und das Roboter-Modell 7M des Parallelroboters 7. Der Schritt b) weist auf: Bestimmen des Mast-Reglers 3RE zu dem Regeln des Verteilermasts 3 in Abhängigkeit von dem identifizierten Mast-Modell 3M und des Roboter-Reglers 7RE zu dem Regeln des Parallelroboters 7 in Abhängigkeit von dem identifizierten Roboter-Modell 7M. Identifizieren eines System-Modells SM des Baustoffsystems 1 mittels Ansteuerns der Antriebseinrichtungen 4a-e mit Eingangssignalen IS bestimmend eine Spitzenposition SPO der Mastspitze 3S mittels des bestimmten Mast-Reglers 3RE, während der Parallelroboter 7 zum Erreichen einer Soll-Position der Austrageinrichtung 2 mittels des bestimmten Roboter-Reglers 7RE geregelt wird, und mittels Erfassens von Ausgangssignalen OS aufweisend eine Abweichung DI einer Ist-Position des Parallelroboters 7 von der Mitten-Position und/oder einer Ist-Ausrichtung des Parallelroboters 7 von der Mitten-Ausrichtung. Bestimmen des Reglers RE in Abhängigkeit von dem identifizierten System-Modell SM. Der Schritt c) weist auf: Regeln des Verteilermasts 3 zu dem Positionieren der Austrageinrichtung 2 mittels des bestimmten Reglers RE, und insbesondere des Parallelroboters 7 zu dem Positionieren der Austrageinrichtung 2 mittels des bestimmten Roboter-Reglers 7RE.

Des Weiteren sind die Eingangssignale IS zum Anregen eines Frequenzspektrums des Verteilermasts 3, insbesondere zu dem Identifizieren des Mast-Modells 3M, und/oder des Parallelroboters 7, insbesondere zu dem Identifizieren des Roboter-Modells 7M.

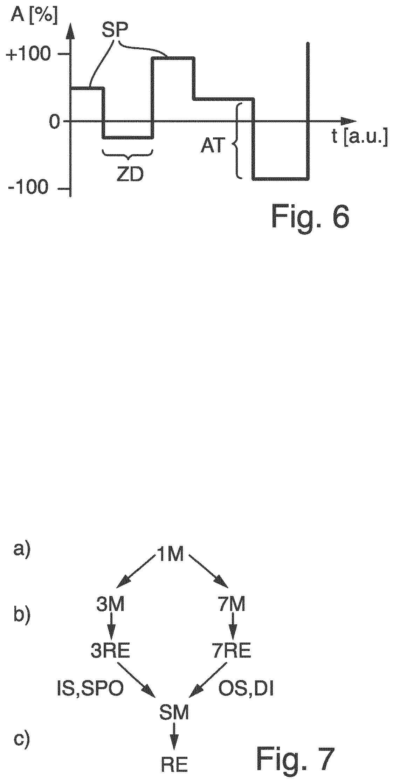

Außerdem weisen die Eingangssignale IS Sprünge SP, insbesondere verschiedener Zeitdauer ZD und/oder verschiedener Amplitude AT, auf, insbesondere zu dem Identifizieren des Mast-Modells 3M. Insbesondere sind die Eingangssignale IS die Sprünge SP, insbesondere zu dem Identifizieren des Roboter-Modells 7M. Dies ist in Fig. 6 gezeigt.

Weiter wird der Schritt a) für verschiedene Stellungen des Verteilermasts 3 und/oder für verschiedene Beladungen des Verteilermasts 3 mit Baustoff BS zu dem Identifizieren verschiedener Modelle 1M des Baustoffsystems 1 ausgeführt, insbesondere verschiedener Mast-Modelle 3M des Verteilermasts 3. Der Schritt b) weist auf: Bestimmen, insbesondere nur, des, insbesondere einzigen, Reglers RE, insbesondere Mast-Reglers 3RE, in Abhängigkeit von den identifizierten Modellen 1M, insbesondere den identifizierten Mast-Modellen 3M.

Zudem wird der Schritt a) mittels eines gegenüber dem in dem Schritt b) bestimmten Reglers RE einfacheren Reglers ERE, insbesondere eines P-Reglers PRE, ausgeführt. Zusätzlich oder alternativ weist das Modell 1M ein lineares Modell 1LM auf. Insbesondere ist das Modell 1M das lineare Modell 1LM. Weiter zusätzlich oder alternativ weist der in dem Schritt b) bestimmte Regler RE einen linearen Regler LRE, insbesondere einen LQ-Regler, einen LQG-Regler, einen LPV-Regler, und/oder einen robusten Regler RRE, insbesondere einen H-unendlich-Regler, und/oder einen modellprädikativen Regler MPRE auf. Insbesondere ist der bestimmte Regler RE der lineare Regler LRE und/oder der robuste Regler RRE und/oder der modellprädikative Regler MPRE.

Mit anderen Worten: Die Eingangssignale werden nicht direkt ausgegeben, sondern stören den einfacheren Regler um den Arbeitsbereich der Antriebseinrichtungen einzuhalten und insgesamt nicht Gefahr zu laufen, mit irgendwelchen Gegenständen zu kollidieren.

Zusätzlich oder alternativ können mittels spezieller Verfahren (Optimierung, Subspace Verfahren, etc.) Modelle in Form von Zustandsraumdarstellungen (Differentialgleichungen), Übertragungsfunktionen, ARMA bzw. ARMAX Modellen (o.ä.) identifiziert werden.

Des Weiteren weisen/weist das Baustoffsystem 1 und/oder der Verteilermast 3 zum Verstellen der Mastsegmente 3a-d ein Drehwerk 5 und/oder Drehgelenke 6a, 6b, 6c, 6d auf. Zusätzlich oder alternativ sind die Ausgangssignale OS für Drehwinkelstellungen WSa, WSb, WSc, WSd, WSe, insbesondere und Drehwinkelstellungsgeschwindigkeiten, der Mastsegmente 3a-d repräsentativ, insbesondere zu dem Identifizieren des Mast-Modells 3M. Insbesondere sind die Ausgangssignale OS die Drehwinkelstellungen WSa-e, insbesondere und die Drehwinkelstellungsgeschwindigkeiten. Weiter zusätzlich oder alternativ weist der Regler RE einen Drehwinkelregler WRE auf. Insbesondere ist der Regler RE der Drehwinkelregler WRE.

In dem gezeigten Ausführungsbeispiel weisen/weist das Baustoffsystem 1 und/oder der Verteilermast 3 vier Drehgelenke 6a-d auf. In alternativen Ausführungsbeispielen können/kann das Baustoffsystem und/oder der Verteilermast mindestens drei Drehgelenke aufweisen.

Im Detail weist das Baustoffsystem 1 das Drehwerk 5 und eine Inertialsensoreinrichtung 9 auf. Die Inertialsensoreinrichtung 9 ist an einem dem Drehwerk 5 gegenüberliegenden Ende 3S des Verteilermasts 3, insbesondere dem Parallelroboter 7, und/oder der Austrageinrichtung 2 zu dem Erfassen eines Ausgangssignals OS verursacht durch eine Bewegung angeregt durch ein Drehen des Drehwerks 5 angeordnet.

Außerdem wird das Erfassen eines Ausgangssignals OS verursacht durch die angeregten Bewegungen des Parallelroboters 7 mittels einer optischen Messeinrichtung 8 ausgeführt, insbesondere eines Lasertrackers 8'.

Mit anderen Worten: Als Eingangssignale des Verteilermasts können Ansteuerungssignale von Ventilen bezeichnet werden. Beim Parallelroboter kann es eine Positionsvorgabe sein. Als Ausgangssignale können es beim Verteilermast die jeweiligen Armwinkel und beim Parallelroboter die aktuelle Position im globalen Koordinatensystem sein.

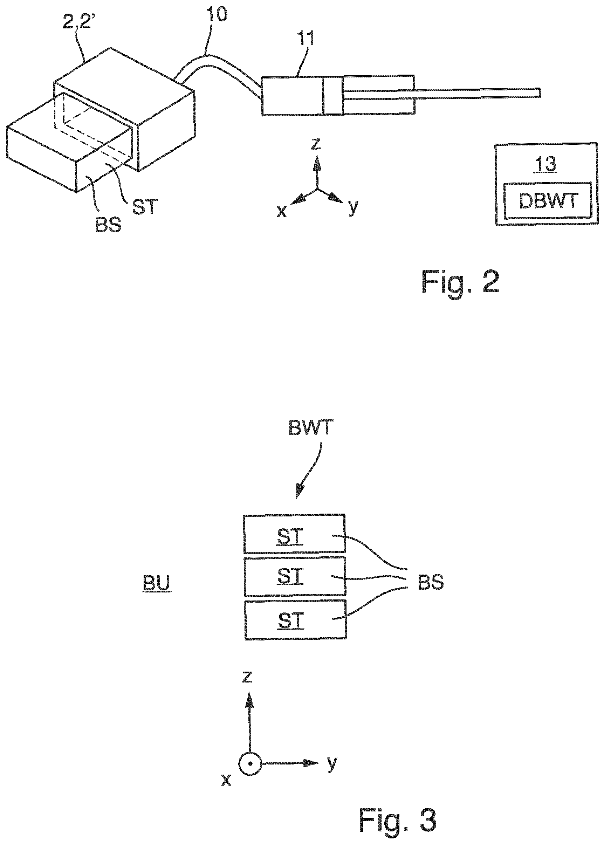

Weiter weist die Austrageinrichtung 2 einen Druckkopf 2' auf. Insbesondere ist die Austrageinrichtung 2 der Druckkopf 2'. Der Druckkopf 2' ist zu dem Austragen von Baustoff BS aus dem Baustoffsystem 1 heraus und zum Formen von Baustoff BS zum Bilden eines Strangs ST von Baustoff BS, insbesondere zum 3D-Drucken von einem Bauwerksteil BWT, ausgebildet, insbesondere trägt aus und formt und bildet somit, insbesondere druckt. Dies ist in Fig. 3 gezeigt.

Zudem weist der Schritt c) auf: Regeln des Baustoffsystems 1 in Abhängigkeit von Daten DBWT des zu bauenden, insbesondere zu druckenden, Bauwerkteils BWT, insbesondere zum Abfahren vorgegebener Trajektorien.

Des Weiteren weist das Verfahren den Schritt auf: Austragen von Baustoff BS mittels der Austrageinrichtung 2 während des Regelns des Baustoffsystems 1, insbesondere zu dem Positionieren der Austrageinrichtung 2, zum Verteilen von Baustoff BS.

Außerdem weist das Baustoffsystem 1 eine Förderleitung 10 auf. Die Förderleitung 10 ist entlang des Verteilermasts 3 zum Leiten von Baustoff BS zu der Austrageinrichtung 2 angeordnet. Zusätzlich oder alternativ weist das Baustoffsystem 1 eine Baustoffpumpe 11 auf. Die Baustoffpumpe 11 ist zum Fördern von Baustoff BS, insbesondere durch die Förderleitung 10 hindurch, zu der Austrageinrichtung 2 ausgebildet, insbesondere fördert. Insbesondere weist das Verfahren den Schritt auf: Fördern von Baustoff BS mittels der Baustoffpumpe 11 während des Regelns des Baustoffsystems 1, insbesondere zu dem Positionieren der Austrageinrichtung 2.

Im Übrigen sind/ist die Austrageinrichtung 2, der Verteilermast 3, die Antriebseinrichtungen 4a-h, der Parallelroboter 7, die Inertialsensoreinrichtung 9, die Messeinrichtung 8 und/oder die Baustoffpumpe 11, insbesondere jeweils, zum Zusammenwirken mit der Identifizierungs-, Bestimmungs- und Regelungs-Einrichtung 13 ausgebildet, insbesondere wirken zusammen.

Weiter weist der Verteilermast 3 eine Positionierungsgenauigkeit 3PG von minimal 500 mm und/oder maximal 10 mm auf, und/oder der Verteilermast 3 weist eine Reichweite 3R von minimal 10 m (Meter) und/oder maximal 100 m auf, und/oder der Verteilermast 3 weist eine maximale Geschwindigkeit 3vmax von minimal 10 mm/s (Millimeter pro Sekunde) und/oder maximal 2 m/s (Meter pro Sekunde) auf, und/oder der Verteilermast weist eine maximale Beschleunigung und/oder Verzögerung 3amax von minimal 1 m/s² (Meter pro Quadratsekunde) und/oder maximal 20 m/s² auf, und/oder der Parallelroboter 7 weist eine Positionierungsgenauigkeit 7PG von minimal 50 mm und/oder maximal 0,1 mm, insbesondere maximal 1 mm, auf, und/oder der Parallelroboter 7 weist eine Reichweite 7R von minimal 10 mm, insbesondere minimal 100 mm, und/oder maximal 1000 mm, insbesondere maximal 500 mm, auf, und/oder der Parallelroboter 7 weist eine maximale Geschwindigkeit 7vmax von minimal 10 mm/s und/oder maximal 10 m/s auf, und/oder der Parallelroboter 7 weist eine maximale Beschleunigung und/oder Verzögerung 7amax von minimal 0,1 m/s² und/oder maximal 500 m/s² auf.

Wie die gezeigten und oben erläuterten Ausführungsbeispiele deutlich machen, stellt die Erfindung ein vorteilhaftes Verfahren und ein vorteilhaftes System jeweils zum Betreiben eines Baustoffsystems zugrunde, das jeweils verbesserte Eigenschaften aufweist.

## Patentansprüche

1. Verfahren zum Betreiben eines Baustoffsystems (1),
- wobei das Baustoffsystem (1) eine Austrageinrichtung (2), einen Verteilermast (3) und ansteuerbare Antriebseinrichtungen (4a, 4b, 4c, 4d, 4e, 4f, 4g, 4h) aufweist,
- wobei die Austrageinrichtung (2) zum Austragen von Baustoff (BS) aus dem Baustoffsystem (1) heraus ausgebildet ist,
- wobei der Verteilermast (3) zum Positionieren der Austrageinrichtung (2) verstellbare Mastsegmente (3a, 3b, 3c, 3d) aufweist, und
- wobei die Antriebseinrichtungen (4a-e) zum Antreiben der Mastsegmente (3a-d) ausgebildet sind,
- wobei das Verfahren die Schritte aufweist:
a) Identifizieren eines Modells (1M) des Baustoffsystems (1) mittels Ansteuerns der Antriebseinrichtungen (4a-e) mit Eingangssignalen (IS) zum Anregen von Bewegungen des Verteilermasts (3) und mittels Erfassens von Ausgangssignalen (OS) verursacht durch die angeregten Bewegungen,
b) Bestimmen, insbesondere Berechnen, eines Reglers (RE) in Abhängigkeit von dem identifizierten Modell (1M), und
c) Regeln des Baustoffsystems (1), insbesondere zum Erreichen und/oder zum Halten einer Soll-Stellung des Verteilermasts (3), mittels des bestimmten Reglers (RE).

2. Verfahren nach dem vorhergehenden Anspruch,
- wobei die Eingangssignale (IS) zum Anregen eines Frequenzspektrums des Verteilermasts (3) sind.

3. Verfahren nach einem der vorhergehenden Ansprüche,
- wobei die Eingangssignale (IS) Sprünge (SP), insbesondere verschiedener Zeitdauer (ZD) und/oder verschiedener Amplitude (AT), aufweisen, insbesondere sind.

4. Verfahren nach einem der vorhergehenden Ansprüche,
- wobei der Schritt a) für verschiedene Stellungen des Verteilermasts (3) und/oder für verschiedene Beladungen des Verteilermasts (3) mit Baustoff (BS) zum Identifizieren verschiedener Modelle (1M) des Baustoffsystems (1) ausgeführt wird, und
- wobei der Schritt b) aufweist: Bestimmen, insbesondere nur, des, insbesondere einzigen, Reglers (RE) in Abhängigkeit von den identifizierten Modellen (1M).

5. Verfahren nach einem der vorhergehenden Ansprüche,
- wobei der Schritt a) mittels eines gegenüber dem in dem Schritt b) bestimmten Reglers (RE) einfacheren Reglers (ERE), insbesondere eines P-Reglers (PRE), ausgeführt wird, und/oder
- wobei das Modell (1M) ein lineares Modell (1LM) aufweist, insbesondere ist, und/oder
- wobei der in dem Schritt b) bestimmte Regler (RE) einen linearen Regler (LRE), insbesondere einen LQ-Regler, einen LQG-Regler, einen LPV-Regler, und/oder einen robusten Regler (RRE), insbesondere einen H-unendlich-Regler, und/oder einen modellprädikativen Regler (MPRE) aufweist, insbesondere ist.

6. Verfahren nach einem der vorhergehenden Ansprüche,
- wobei das Baustoffsystem (1) und/oder der Verteilermast (3) zum Verstellen der Mastsegmente (3a-d) ein Drehwerk (5) und/oder Drehgelenke (6a, 6b, 6c, 6d) aufweisen/aufweist, und/oder
- wobei die Ausgangssignale (OS) für Drehwinkelstellungen (WSa, WSb, WSc, WSd, WSe), insbesondere und Drehwinkelstellungsgeschwindigkeiten, der Mastsegmente (3a-d) repräsentativ sind, insbesondere die Drehwinkelstellungen (WSa-e), insbesondere und die Drehwinkelstellungsgeschwindigkeiten, sind, und/oder
- wobei der Regler (RE) einen Drehwinkelregler (WRE) aufweist, insbesondere der Drehwinkelregler (WRE) ist.

7. Verfahren nach einem der vorhergehenden Ansprüche,
- wobei das Baustoffsystem (1) einen Parallelroboter (7), insbesondere einen Deltaroboter (7'), aufweist,
- wobei der Verteilermast (3) zum Positionieren des Parallelroboters (7), insbesondere an einer Mastspitze (3S) des Verteilermasts (3), ausgebildet ist,
- wobei der Parallelroboter (7) zum Positionieren der Austrageinrichtung (2) ausgebildet ist,
- wobei die Antriebseinrichtungen (4f-h) zum Antreiben des Parallelroboters (7) ausgebildet sind,
- insbesondere wobei der Schritt a) aufweist: Identifizieren mindestens des Modells (1M) des Baustoffsystems (1) mittels des Ansteuerns der Antriebseinrichtungen (4f-h) mit den Eingangssignalen (IS) zum Anregen von Bewegungen des Parallelroboters (7) und mittels des Erfassens von den Ausgangssignalen (OS) verursacht durch die angeregten Bewegungen, insbesondere wobei die Ausgangssignale (OS) für eine Position (PO) und/oder eine Ausrichtung (AR) des Parallelroboters (7) und/oder der Austrageinrichtung (2) in Bezug auf eine Bau-Umgebung (BU) des Baustoffsystems (1) repräsentativ sind, insbesondere die Position (PO) und/oder die Ausrichtung (AR) sind,
- wobei der Schritt b) aufweist: Bestimmen mindestens des Reglers (RE) in Abhängigkeit von mindestens dem identifizierten Modell (1M), und
- wobei der Schritt c) aufweist: Regeln des Baustoffsystems (1), insbesondere zum Erreichen und/oder Halten einer Soll-Position und/oder einer Soll-Ausrichtung des Parallelroboters (7), mittels mindestens des bestimmten Reglers (RE).

8. Verfahren nach dem vorhergehenden Anspruch,
- wobei das Erfassen eines Ausgangssignals (OS) verursacht durch die angeregten Bewegungen des Parallelroboters (7) mittels einer optischen Messeinrichtung (8), insbesondere eines Lasertrackers (8'), ausgeführt wird.

9. Verfahren nach einem der beiden vorhergehenden Ansprüche,
- wobei der Schritt b) aufweist: Bestimmen des Reglers (RE) zu dem Regeln des Verteilermasts (3) zu dem Positionieren der Austrageinrichtung (2) derart, dass der Parallelroboter (7) seine Mitten-Position und/oder seine Mitten-Ausrichtung erreicht,
- insbesondere wobei der Schritt a) aufweist: Identifizieren des Modells (1M) aufweisend ein Mast-Modell (3M) des Verteilermasts (3) und ein Roboter-Modell (7M) des Parallelroboters (7),
- wobei der Schritt b) aufweist:
- Bestimmen eines Mast-Reglers (3RE) zu einem Regeln des Verteilermasts (3) in Abhängigkeit von dem identifizierten Mast-Modell (3M) und eines Roboter-Reglers (7RE) zu einem Regeln des Parallelroboters (7) in Abhängigkeit von dem identifizierten Roboter-Modell (7M),
- Identifizieren eines System-Modells (SM) des Baustoffsystems (1) mittels Ansteuerns der Antriebseinrichtungen (4a-e) mit Eingangssignalen (IS) bestimmend eine Spitzenposition (SPO) der Mastspitze (3S) mittels des bestimmten Mast-Reglers (3RE), während der Parallelroboter (7) zum Erreichen einer Soll-Position der Austrageinrichtung (2) mittels des bestimmten Roboter-Reglers (7RE) geregelt wird, und mittels Erfassens von Ausgangssignalen (OS) aufweisend eine Abweichung (DI) einer Ist-Position des Parallelroboters (7) von der Mitten-Position und/oder einer Ist-Ausrichtung des Parallelroboters (7) von der Mitten-Ausrichtung,
- Bestimmen des Reglers (RE) in Abhängigkeit von dem identifizierten System-Modell (SM), und
- wobei der Schritt c) aufweist: Regeln des Verteilermasts (3) zu dem Positionieren der Austrageinrichtung (2) mittels des bestimmten Reglers (RE), und insbesondere des Parallelroboters (7) zu dem Positionieren der Austrageinrichtung (2) mittels des bestimmten Roboter-Reglers (7RE).

10. Verfahren nach Anspruch 6, und insbesondere einem der Ansprüche 7 bis 9,
- wobei das Baustoffsystem (1) das Drehwerk (5) und eine Inertialsensoreinrichtung (9) aufweist, wobei die Inertialsensoreinrichtung (9) an einem dem Drehwerk (5) gegenüberliegenden Ende (3S) des Verteilermasts (3), insbesondere dem Parallelroboter (7), und/oder der Austrageinrichtung (2) zu dem Erfassen eines Ausgangssignals (OS) verursacht durch eine Bewegung angeregt durch ein Drehen des Drehwerks (5) angeordnet ist.

11. Verfahren nach einem der vorhergehenden Ansprüche,
- wobei die Austrageinrichtung (2) einen Druckkopf (2') aufweist, insbesondere ist,
- wobei der Druckkopf (2') zu dem Austragen von Baustoff (BS) aus dem Baustoffsystem (1) heraus und zum Formen von Baustoff (BS) zum Bilden eines Strangs (ST) von Baustoff (BS), insbesondere zum 3D-Drucken von einem Bauwerksteil (BWT), ausgebildet ist.

12. Verfahren nach einem der vorhergehenden Ansprüche, insbesondere dem vorhergehenden Anspruch,
- wobei der Schritt c) aufweist: Regeln des Baustoffsystems (1) in Abhängigkeit von Daten (DBWT) eines zu bauenden, insbesondere zu druckenden, Bauwerkteils (BWT).

13. Verfahren nach einem der vorhergehenden Ansprüche,
- wobei das Verfahren den Schritt aufweist: Austragen von Baustoff (BS) mittels der Austrageinrichtung (2) während des Regelns des Baustoffsystems (1), insbesondere zu dem Positionieren der Austrageinrichtung (2), zum Verteilen von Baustoff (BS).

14. Verfahren nach einem der vorhergehenden Ansprüche,
- wobei das Baustoffsystem (1) eine Förderleitung (10) aufweist, wobei die Förderleitung (10) entlang des Verteilermasts (3) zum Leiten von Baustoff (BS) zu der Austrageinrichtung (2) angeordnet ist, und/oder
- wobei das Baustoffsystem (1) eine Baustoffpumpe (11) aufweist, wobei die Baustoffpumpe (11) zum Fördern von Baustoff (BS), insbesondere durch die Förderleitung (10) hindurch, zu der Austrageinrichtung (2) ausgebildet ist, insbesondere wobei das Verfahren den Schritt aufweist: Fördern von Baustoff (BS) mittels der Baustoffpumpe (11) während des Regelns des Baustoffsystems (1), insbesondere zum Positionieren der Austrageinrichtung (2).

15. System (12) zum Betreiben eines Baustoffsystems (1), wobei das System (12) eine Identifizierungs-, Bestimmungs- und Regelungs-Einrichtung (13) aufweist, wobei die Identifizierungs-, Bestimmungs- und Regelungs-Einrichtung (13) zum Ausführen eines Verfahrens nach einem der vorhergehenden Ansprüche ausgebildet ist, insbesondere wobei das System (12) das Baustoffsystem (1) aufweist.

## Claims

1. A method for operating a building material system (1),
- wherein the building material system (1) includes a discharge device (2), a distributor boom (3), and actuatable drive devices (4a, 4b, 4c, 4d, 4e, 4f, 4g, 4h),
- wherein the discharge device (2) is designed for discharging building material (BS) from the building material system (1),
- wherein the distributor boom (3) includes adjustable boom segments (3a, 3b, 3c, 3d) for positioning the discharge device (2), and
- wherein the drive devices (4a-e) are designed for driving the boom segments (3a-d),
- wherein the method includes the following steps:
a) identifying a model (1M) of the building material system (1) by means of actuation of the drive devices (4a-e) using input signals (IS) to excite movements of the distributor boom (3) and by means of detection of output signals (OS) caused by the excited movements,
b) determining, in particular calculating, a controller (RE) depending on the identified model (1M), and
c) controlling the building material system (1), in particular to reach and/or maintain a target position of the distributor boom (3), by means of the determined controller (RE).

2. The method as claimed in the preceding claim,
- wherein the input signals (IS) are to excite a frequency spectrum of the distributor boom (3).

3. The method as claimed in any one of the preceding claims,
- wherein the input signals (IS) include, in particular are, jumps (SP), in particular of differing duration (ZD) and/or differing amplitude (AT).

4. The method as claimed in any one of the preceding claims,
- wherein step a) is performed for various positions of the distributor boom (3) and/or for various loads of the distributor boom (3) with building material (BS) to identify different models (1M) of the building material system (1), and
- wherein step b) includes: determining, in particular only, the, in particular single, controller (RE) depending on the identified models (1M).

5. The method as claimed in any one of the preceding claims,
- wherein step a) is performed by means of a controller (ERE) simpler than the controller (RE) determined in step b), in particular a P controller (PRE), and/or
- wherein the model (1M) includes, in particular is, a linear model (1LM), and/or
- wherein the controller (RE) determined in step b) includes, in particular is, a linear controller (LRE), in particular an LQ controller, an LQG controller, an LPV controller, and/or a robust controller (RRE), in particular an H-infinite controller, and/or a model-predictive controller (MPRE).

6. The method as claimed in any one of the preceding claims,
- wherein the building material system (1) and/or the distributor boom (3) include/includes a pivot mechanism (5) and/or pivot joints (6a, 6b, 6c, 6d) for adjusting the boom segments (3a-d), and/or
- wherein the output signals (OS) are representative of rotational angle positions (WSa, WSb, WSc, WSd, WSe), in particular and rotational angle positioning speeds, of the boom segments (3a-d), in particular are the rotational angle positions (WSa-e), in particular and the rotational angle positioning speeds, and/or
- wherein the controller (RE) includes a rotational angle controller (WRE), in particular is the rotational angle controller (WRE).

7. The method as claimed in any one of the preceding claims,
- wherein the building material system (1) includes a parallel robot (7), in particular a delta robot (7'),
- wherein the distributor boom (3) is designed for positioning the parallel robot (7), in particular at a boom tip (3S) of the distributor boom (3),
- wherein the parallel robot (7) is designed for positioning the discharge device (2),
- wherein the drive devices (4f-h) are designed for driving the parallel robot (7),
- in particular wherein step a) includes: identifying at least the model (1M) of the building material system (1) by means of the actuation of the drive devices (4f-h) using the input signals (IS) to excite movements of the parallel robot (7) and by means of the detection of the output signals (OS) caused by the excited movements, in particular wherein the output signals (OS) are representative of a position (PO) and/or an alignment (AR) of the parallel robot (7) and/or the discharge device (2) with respect to a building environment (BU) of the building material system (1), in particular are the position (PO) and/or the alignment (AR),
- wherein step b) includes: determining at least the controller (RE) depending on at least the identified model (1M), and
- wherein step c) includes: controlling the building material system (1), in particular to reach and/or maintain a target position and/or a target alignment of the parallel robot (7), by means of at least the determined controller (RE).

8. The method as claimed in the preceding claim,
- wherein the detection of an output signal (OS) caused by the excited movements of the parallel robot (7) is performed by means of an optical measuring device (8), in particular a laser tracker (8').

9. The method as claimed in one of the two preceding claims,
- wherein step b) includes: determining the controller (RE) for the controlling of the distributor boom (3) for the positioning of the discharge device (2) such that the parallel robot (7) reaches its center position and/or its center alignment,
- in particular wherein step a) includes: identifying the model (1M) including a boom model (3M) of the distributor boom (3) and a robot model (7M) of the parallel robot (7),
- wherein step b) includes:
- determining a boom controller (3RE) for controlling the distributor boom (3) depending on the identified boom model (3M) and a robot controller (7RE) for controlling the parallel robot (7) depending on the identified robot model (7M),
- identifying a system model (SM) of the building material system (1) by means of actuation the drive devices (4a-e) using input signals (IS) determining a tip position (SPO) of the boom tip (3S) by means of the determined boom controller (3RE), while the parallel robot (7) is controlled by means of the determined robot controller (7RE) to reach a target position of the discharge device (2), and by means of detection of output signals (OS) including a deviation (DI) of an actual position of the parallel robot (7) from the center position and/or an actual alignment of the parallel robot (7) from the center alignment,
- determining the controller (RE) depending on the identified system model (SM), and
- wherein step c) includes: controlling the distributor boom (3) for the positioning of the discharge device (2) by means of the determined controller (RE), and in particular the parallel robot (7) for the positioning of the discharge device (2) by means of the determined robot controller (7RE).

10. The method as claimed in claim 6, and in particular as claimed in any one of claims 7 to 9,
- wherein the building material system (1) includes the pivot mechanism (5) and an inertial sensor device (9), wherein the inertial sensor device (9) is arranged at an end (3S) of the distributor boom (3) opposite to the pivot mechanism (5), in particular to the parallel robot (7), and/or the discharge device (2) for the detection of an output signal (OS) caused by a movement excited by a rotation of the pivot mechanism (5).

11. The method as claimed in any one of the preceding claims,
- wherein the discharge device (2) includes, in particular is, a printhead (2'),
- wherein the printhead (2') is designed for discharging building material (BS) from the building material system (1) and for shaping building material (BS) to form a strand (ST) of building material (BS), in particular for 3D printing of a structural part (BWT).

12. The method as claimed in any one of the preceding claims, in particular the preceding claim,
- wherein step c) includes: controlling the building material system (1) depending on data (DBWT) of a structural part (BWT) to be built, in particular to be printed.

13. The method as claimed in any one of the preceding claims,
- wherein the method includes the following step: discharging building material (BS) by means of the discharge device (2) during the control of the building material system (1), in particular for the positioning of the discharge device (2), for distributing building material (BS).

14. The method as claimed in any one of the preceding claims,
- wherein the building material system (1) includes a conveyor line (10), wherein the conveyor line (10) is arranged along the distributor boom (3) for guiding building material (BS) to the discharge device (2), and/or
- wherein the building material system (1) includes a building material pump (11), wherein the building material pump (11) is designed for conveying building material (BS), in particular through the conveyor line (10), to the discharge device (2), in particular wherein the method includes the following step: conveying building material (BS) by means of the building material pump (11) during the control of the building material system (1), in particular for positioning the discharge device (2).

15. A system (12) for operating a building material system (1), wherein the system (12) includes an identification, determination, and control device (13), wherein the identification, determination, and control device (13) is designed to perform a method as claimed in any one of the preceding claims, in particular wherein the system (12) includes the building material system (1).

## Revendications

1. Procédé destiné à faire fonctionner un système de matériau de construction (1),
- le système de matériau de construction (1) comportant un dispositif d'évacuation (2), un mât de distribution (3) et des dispositifs d'entraînement (4a, 4b, 4c, 4d, 4e, 4f, 4g, 4h) pouvant être pilotés,
- le dispositif d'évacuation (2) étant formé pour évacuer du matériau de construction (BS) hors du système de matériau de construction (1),
- le mât de distribution (3) comportant pour positionner le dispositif d'évacuation (2) des segments de mât (3a, 3b, 3c, 3d) ajustables, et
- les dispositifs d'entraînement (4a-e) étant formés pour entraîner les segments de mât (3a-d),
- le procédé comportant les étapes :
a) identification d'un modèle (1M) du système de matériau de construction (1) par pilotage des dispositifs d'entraînement (4a-e) avec des signaux d'entrée (IS) pour stimuler des déplacements du mât de distribution (3) et par détection des signaux de sortie (OS) causés par les déplacements stimulés ;
b) détermination, en particulier calcul, d'un régulateur (RE) en fonction du modèle identifié (1M), et
c) régulation du système de matériau de construction (1), en particulier pour atteindre et/ou maintenir une position de consigne du mât de distribution (3), au moyen du régulateur (RE) déterminé.

2. Procédé selon la revendication précédente,
- les signaux d'entrée (IS) se destinant à stimuler un spectre de fréquence du mât de distribution (3).

3. Procédé selon l'une des revendications précédentes,
- les signaux d'entrée (IS) comportant, en particulier étant, des sauts (SP), en particulier de durée différente (ZD) et/ou d'amplitude différente (AT).

4. Procédé selon l'une des revendications précédentes,
- l'étape a) étant exécutée pour différentes positions du mât de distribution (3) et/ou pour différentes charges du mât de distribution (3) avec du matériau de construction (BS) pour identifier différents modèles (1M) du système de matériau de construction (1), et
- l'étape b) comportant : détermination, en particulier seulement, du régulateur (RE), en particulier unique, en fonction des modèles identifiés (1M).

5. Procédé selon l'une des revendications précédentes,
- l'étape a) étant exécutée au moyen d'un régulateur (RE) plus simple (ERE) par rapport au régulateur (RE) déterminé à l'étape b), en particulier d'un régulateur P (PRE), et/ou
- le modèle (1M) comportant, en particulier étant, un modèle linéaire (1LM), et/ou
- le régulateur (RE) déterminé à l'étape b) comportant, en particulier étant, un régulateur linéaire (LRE), en particulier un régulateur LQ, un régulateur LQG, un régulateur LPV, et/ou un régulateur robuste (RRE), en particulier un régulateur H-infini, et/ou un régulateur à modèle prédictif (MPRE).

6. Procédé selon l'une des revendications précédentes,
- le système de matériau de construction (1) et/ou le mât de distribution (3) comportant pour l'ajustement des segments de mât (3a-d) un mécanisme de rotation (5) et/ou des articulations rotatives (6a, 6b, 6c, 6d), et/ou
- les signaux de sortie (OS) représentant des positions d'angle de rotation (WSa, WSb, WSc, WSd, WSe), et en particulier des vitesses de position d'angle de rotation, des segments de mât (3a-d), en particulier étant les positions d'angle de rotation (WSa-e), et en particulier les vitesses de position d'angle de rotation, et/ou
- le régulateur (RE) comportant un régulateur d'angle de rotation (WRE), en particulier étant le régulateur d'angle de rotation (WRE).

7. Procédé selon l'une des revendications précédentes,
- le système de matériau de construction (1) comportant un robot parallèle (7), en particulier un robot Delta (7'),
- le mât de distribution (3) étant formé pour positionner le robot parallèle (7), en particulier sur une pointe de mât (3S) du mât de distribution (3),
- le robot parallèle (7) étant formé pour positionner le dispositif d'évacuation (2),
- les dispositifs d'entraînement (4f-h) étant formés pour entraîner le robot parallèle (7),
- en particulier, l'étape a) comportant : identification d'au moins un modèle (1M) du système de matériau de construction (1) par le pilotage des dispositifs d'entraînement (4f-h) avec les signaux d'entrée (IS) pour stimuler des déplacements du robot parallèle (7) et par la détection des signaux de sortie (OS) causés par les déplacements stimulés, en particulier, les signaux de sortie (OS) étant représentatifs d'une position (PO) et/ou d'une orientation (AR) du robot parallèle (7) et/ou du dispositif d'évacuation (2) par rapport à un environnement de construction (BU) du système de matériau de construction (1), en particulier étant de la position (PO) et/ou de l'orientation (AR),
- l'étape b) comportant : détermination au moins du régulateur (RE) en fonction d'au moins le modèle identifié (1M), et
- l'étape c) comportant : régulation du système de matériau de construction (1), en particulier pour atteindre et/ou maintenir une position de consigne et/ou une orientation de consigne du robot parallèle (7), au moyen au moins du régulateur (RE) déterminé.

8. Procédé selon la revendication précédente,
- la détection d'un signal de sortie (OS) causée par les déplacements stimulés du robot parallèle (7) étant exécutée au moyen d'un dispositif de mesure optique (8), en particulier d'un laser tracker (8').

9. Procédé selon l'une des deux revendications précédentes,
- l'étape b) comportant : détermination du régulateur (RE) pour la régulation du mât de distribution (3) pour le positionnement du dispositif d'évacuation (2) de telle manière que le robot parallèle (7) atteint sa position centrale et/ou son orientation centrale,
- en particulier, l'étape a) comportant : identification du modèle (1M) comportant un modèle de mât (3M) du mât de distribution (3) et un modèle de robot (7M) du robot parallèle (7),
- l'étape b) comportant :
- détermination d'un régulateur de mât (3RE) pour une régulation du mât de distribution (3) en fonction du modèle de mât (3M) identifié et d'un régulateur de robot (7RE) pour une régulation du robot parallèle (7) en fonction du modèle de robot identifié (7M),
- identification d'un modèle de système (SM) du système de matériau de construction (1) par pilotage des dispositifs d'entraînement (4a-e) avec des signaux d'entrée (IS) en déterminant une position de pointe (SPO) de la pointe de mât (3S) au moyen du régulateur de mât (3RE) déterminé, tandis que le robot parallèle (7) est régulé pour atteindre une position de consigne du dispositif d'évacuation (2) au moyen du régulateur de robot (7RE) déterminé, et par détection de signaux de sortie (OS), comportant un écart (DI) d'une position réelle du robot parallèle (7) par rapport à la position centrale et/ou d'une orientation réelle du robot parallèle (7) par rapport à l'orientation centrale,
- détermination du régulateur (RE) en fonction du modèle de système identifié (SM), et
- l'étape c) comportant : régulation du mât de distribution (3) pour le positionnement du dispositif d'évacuation (2) au moyen du régulateur (RE) déterminé, et en particulier du robot parallèle (7) pour le positionnement du dispositif d'évacuation (2) au moyen du régulateur de robot (7RE) déterminé.

10. Procédé selon la revendication 6, et en particulier selon l'une des revendications 7 à 9,
- le système de matériau de construction (1) comportant le mécanisme de rotation (5) et un dispositif de capteur inertiel (9), le dispositif de capteur inertiel (9) étant disposé sur une extrémité (3S), opposée au mécanisme de rotation (5), du mât de distribution (3), en particulier le robot parallèle (7), et/ou le dispositif d'évacuation (2) étant disposé pour la détection d'un signal de sortie (OS) causé par un déplacement stimulé par une rotation du mécanisme de rotation (5).

11. Procédé selon l'une des revendications précédentes,
- le dispositif d'évacuation (2) comportant, en particulier étant, une tête d'impression (2'),
- la tête d'impression (2') étant formée pour l'évacuation du matériau de construction (BS) hors du système de matériau de construction (1) et pour façonner du matériau de construction (BS) pour former un brin (ST) de matériau de construction (BS), en particulier pour l'impression 3D d'une pièce de construction (BWT).

12. Procédé selon l'une des revendications précédentes, en particulier selon la revendication précédente,
- l'étape c) comportant : régulation du système de matériau de construction (1) en fonction de données (DBWT) d'une pièce de construction (BWT) à construire, en particulier à imprimer.

13. Procédé selon l'une des revendications précédentes,
- le procédé comportant l'étape : évacuation de matériau de construction (BS) au moyen du dispositif d'évacuation (2) pendant la régulation du système de matériau de construction (1), en particulier pour le positionnement du dispositif d'évacuation (2), pour la distribution de matériau de construction (BS).

14. Procédé selon l'une des revendications précédentes,
- le système de matériau de construction (1) comportant une ligne de transport (10), la ligne de transport (10) étant disposée le long du mât de distribution (3) pour guider du matériau de construction (BS) vers le dispositif d'évacuation (2), et/ou
- le système de matériau de construction (1) comportant une pompe de matériau de construction (11), la pompe de matériau de construction (11) étant formée pour transporter du matériau de construction (BS), en particulier par la ligne de transport (10), vers le dispositif d'évacuation (2), en particulier le procédé comportant l'étape : transport de matériau de construction (BS) au moyen de la pompe de matériau de construction (11) pendant la régulation du système de matériau de construction (1), en particulier pour le positionnement du dispositif d'évacuation (2).

15. Système (12) destiné à faire fonctionner un système de matériau de construction (1), le système (12) comportant un dispositif d'identification, de détermination et de régulation (13), le dispositif d'identification, de détermination et de régulation (13) étant formé pour exécuter un procédé selon l'une des revendications précédentes, en particulier le système (12) comportant le système de matériau de construction (1).
